# EUROPEAN PATENT SPECIFICATION

(11) **EP 1 394 679 B1**
(45) Date of publication and mention of the grant of the patent: **29.05.2013**
(21) Application number: 02354124.6
(22) Date of filing: 30.08.2002
(51) Int. Cl.: G06F 11/07, G06F 11/22

(54) **Improvements relating to technical support systems**
Verbesserungen an systemen zur technischen Unterstüzung
Ameliorations relatives à systèmes à support technique

(43) Date of publication of application: 03.03.2004
(73) Proprietor: Hewlett-Packard Development Company, L.P., Houston, TX 77070 (US)
(72) Inventor: Owhadi, Eric, 38360 Sassenage (FR)
(74) Representative: Zimmermann, Tankred Klaus

(56) References cited:
- WO-A-00/68793
- US-A- 5 678 002
- US-A- 6 145 096
- "SupportFetchdog" INTERNET, [Online] XP002183114 Retrieved from the Internet: <URL:http://www.4developers.com/fd/> [retrieved on 2001-10-30]

## Description

### Field of the Invention

This invention relates, in general terms, to the field of technical support systems which are used to provide users of electronic devices, data processing apparatus and computer systems with post-sale technical support, whereby software, hardware or other operational problems and difficulties may be resolved without the need for the user to return the equipment to the point of sale or to take the apparatus to a workshop or the like.

### Background to the Invention and Summary of the Prior Art

Whilst a variety of technical support systems are known, a particularly common type is known as "Active Messaging", a web-based support feature that allows users to submit support "calls" using the internet (web) as the principal interface. Broadly speaking, two kinds of Active Messaging implementations are known.

The first relies upon a user pre-loading a substantial piece of software that is designed to provide support features and front end functionality to the end user, but this requires a user to effect a software download, which many internet users are reluctant to do, not least in view of security concerns. In addition, this approach does not readily allow users to be alerted when their particular query has been addressed by a support technician.

The second system is more web-based, in that data harvesting engines can be downloaded from a support server to collect configuration information, in parallel with the support call. "Support Fetchdog", a remote/local software diagnostic tool available from 4Developers LLC (www.4developers.com) incorporates a variety of data harvesters, known as "Configuration Fetchers", each having a data footprint of about 108 KB.

By way of background US, 6145096 (Motive Communications, Inc.) discloses a problem solving method in which a diagnostic map is executed to explore a client machine and gather data, with a data set thus being generated which is indicative of a current operating state of the client device. The data set is then forwarded from the client device to a diagnostic server for analysis, with additional diagnostic maps being used, on an iterative basis, until enough information is available to a user of the client device to correct the given technical problem.

WO-A-00/68793 discloses customer site software that collects information about the configuration of a customer facility and information gathered while detecting a problem at the customer facility, contacts a call centre and transfers this information to a call centre to escalate the unresolved problem. The customer site software periodically checks the status of the problem escalation, and when it discovers that resolution is available, initiates an update of a customer knowledge base at the customer site, accessible by the customer site software.

### Summary of the Invention

The invention is defined in the appended claims. Further advantageous variations are defined in the appended dependent claims.

### Brief Description of the Drawings

Specific embodiments of the invention, in its various aspects, will now be described in greater detail, but strictly by way of example only, by reference to the accompanying drawings, of which:
FIGURE 1 is a schematic illustration of a web-based support system;
FIGURE 2 is a flow diagram illustrating the major steps of the technical support process;
FIGURE 3 is a continuation of the flow diagram of Figure 2; and
FIGURE 4 is a flow diagram showing, in more detail, the installation, operation and removal of the polling application.

### Detailed Description of the Drawings and Best Mode of the Invention

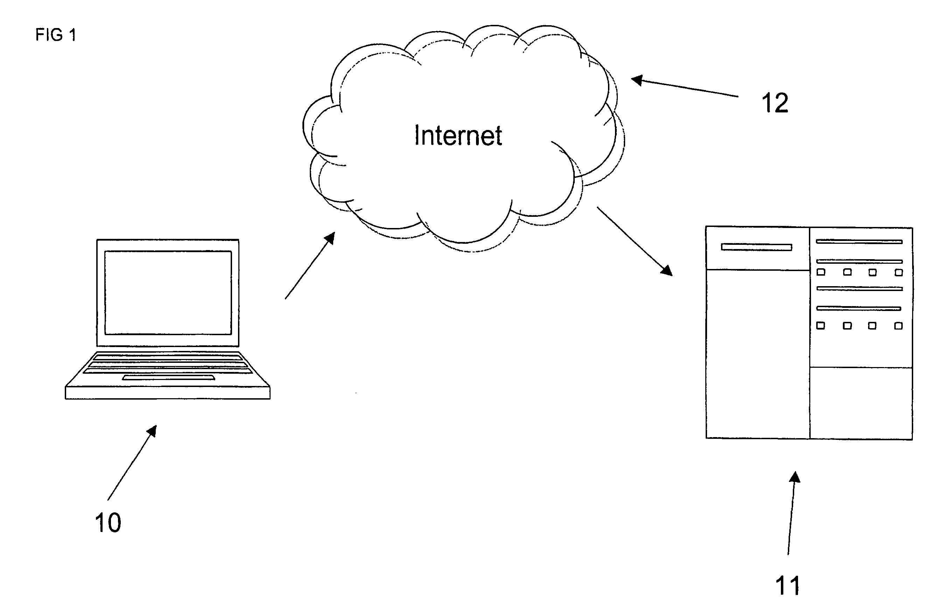

As explained in the introduction, this invention relates generally to a technical support service whereby a user of a client device such as a PC 10 may interact with a support provider 11 via a web-based connection indicated generally at 12 - see Figure 1.

More particularly, the invention relates to an asynchronous support process by which support queries and responses are passed from and to the user on a periodic basis. In parallel with a user/support specialist "chat session", information concerning the configuration of the user's device is sent to the support provider so that an appropriate diagnosis of an apparent fault can be made.

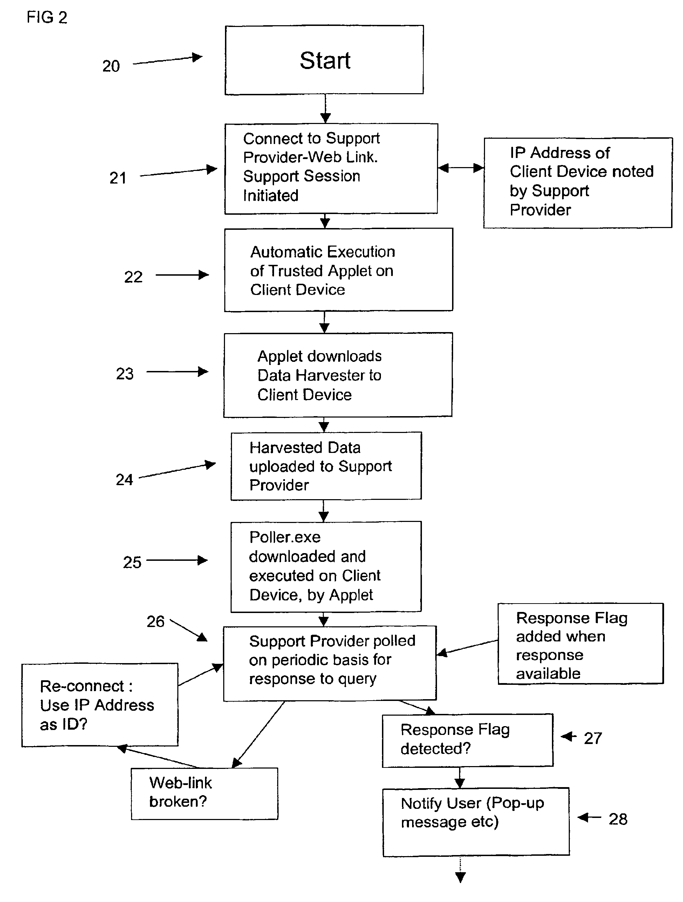

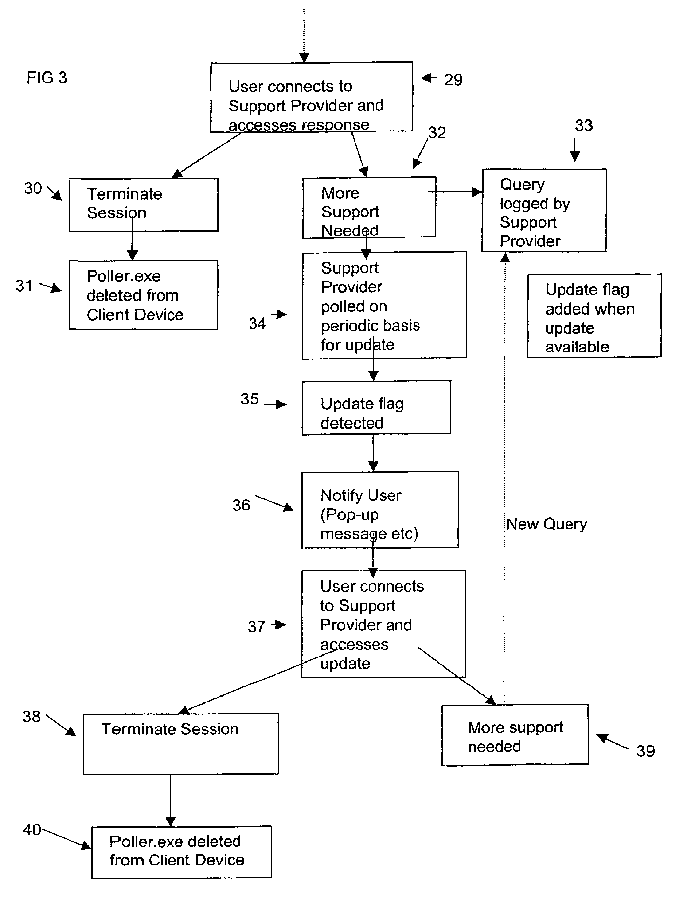

This is shown, in a step-wise manner, in Figures 2 and 3.

Commencing at the start 20, a web-based connection is established between the user's device (e.g. PC 10) and a support provider 11, which, in this example, is constituted by a web server. The connection step 21 thus initiates an HTTP-based support session, with the client device being "identified" to the support server using a unique identifier such as a randomly-generated number or string, or GUID (Global Unique Identifier), for example. It will of course be understood that other identification methods could equally be utilised. Once an appropriate web link has been established to the URL of the support provider, with a support page thus being displayed by a browser application loaded on the client device, an execution step 22 occurs, in which an applet, obtained from the web server, executes from within the browser application on the client device. As will be understood, the applet could be a Java applet, Microsoft "Active X" code, or the like. Before this execution occurs, however, the user must confirm that he/she is happy to trust the applet, bearing in mind that execution thereof will lead to data gathering operations. The trustworthiness of the applet may be verified in a number of generally conventional ways, such as by virtue of a third party digital signature approach (as offered commercially by Verisign, Inc.), thus guaranteeing that the applet code is safe, and virus-free. The user may thus be presented with a query "pop-up" box, seeking confirmation that the applet is trusted and that it may thus be executed. This level of trust is important as the applet, in the subsequent steps of the support method, will be required to operate outside its Java "sandbox", thus potentially gaining access to sensitive areas of the client device. As will be understood by those well-versed in Java programming terminology, a "sandbox" is the programme space and set of rules that developers employ when Java code (such as applets) is produced. Applets, being sent automatically as an integral part of a web page, and being executable upon receipt of the HTML code by a client browser, have the potential to do harm either involuntarily or as the result of a malicious act. In brief, the "sandbox" limitations restrict the type of system resources that can be sought or obtained by the Applet meaning that the Java code is free to operate in a confined area but not beyond the boundaries of this area without express consent first being provided. In the case of the present invention, the diagnostic aspect thereof may require that sensitive configuration information is obtained from the client device which, in the hands of a non-trusted entity, could pose serious security concerns. The term "sandbox" is also known, in some circles, as a "confined runtime environment".

On the basis of this trust, a download step 23 then occurs, during which the applet downloads a small footprint data harvester to the client device, whereby configuration, software/hardware settings and other device specific data are gathered, and subsequently uploaded (see step 24) to the support provider. It will be understood, of course, that this configuration information is required, by the provider, in order for a meaningful diagnosis of any fault or operational difficulty, to be effected. Examples of this general type of data harvester are shown at 4developers.com (see "Support Fetchdog").

As it may be that a support technician associated with the support provider is not able to provide an immediate response, the user of the device, in accordance with the present invention, is able to effect a disconnection of the web link, whilst maintaining the support session in an active state. Thus, the user, at this point, may close his/her browser application, opting to return to the support session at a later time, if appropriate. As explained above, the service provider has, by now, been provided with an identifier of the client device, meaning that a subsequent "call" to the URL of the support provider will enable the support provider to identify the device and thus to "retrieve" the support call information already conveyed by the device.

So that the user is spared the somewhat laborious task of repeatedly accessing the support provider URL, to determine whether or not a response to his/her query is yet available, the invention provides that the trusted applet effects a download of a relatively lightweight (both in terms of data size and computational demand) polling application ("poller.exe"), as shown at step 25. This polling application is operative, on a repeated basis, to poll the support provider URL, and to notify the user as and when a response becomes available. This is shown generally at step 26.

In a preferred embodiment, the polling may be effected on a periodic basis, in that the polling is repeated at a suitable frequency, but it will of course be understood that other arrangements are possible and within the scope of the present disclosure.

So that the support provider can indicate when a response becomes available, use is made of a response flag which is added to the appropriate support provider URL as and when a response becomes available. This flag is detected by the polling application, with detection of the flag causing the polling application to notify the user of that fact, such as by way of a "pop-up" message, audible notification, e-mail or the like - this is shown at steps 27 and 28.

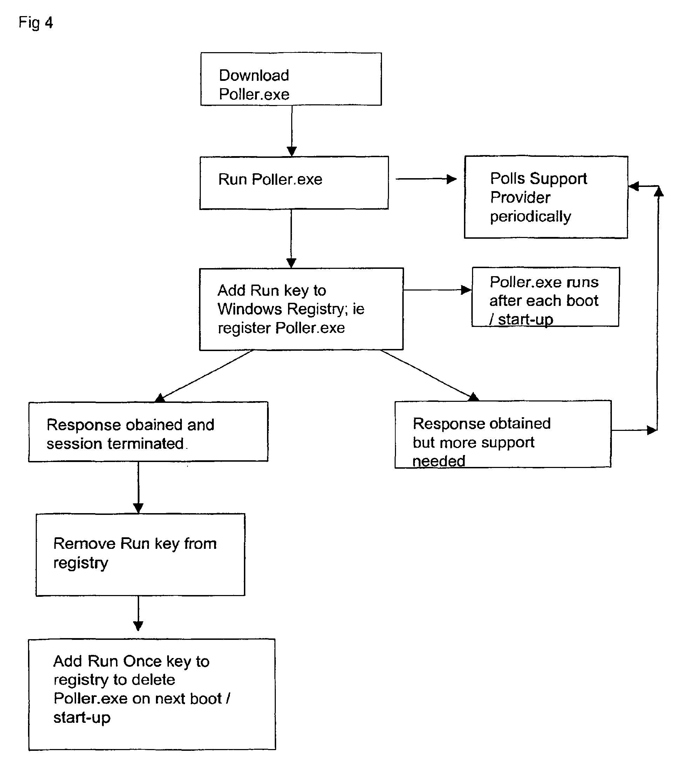

Upon receipt of this notification (see Figure 3), the user then reconnects to the support provider URL, to access the posted response - see step 29. At that point, it may be that the user has sufficient information to remedy the fault or overcome the technical difficulty, meaning that a session termination step 30 may then occur, leading to a deletion step 31, at which the polling application is removed from the client device. This deletion is explained in more detail with reference to Figure 4.

Alternatively, it may be that additional support is needed (see step 32) meaning that a new query is generated, and passed to the support provider, as shown at step 33.

It will be understood that it then becomes necessary, once again, for the user to be notified once an update on his/her query becomes available, and a further polling step 34 is thus undertaken, on a repeated basis, with the polling application then being operative to detect an update flag added, by the support provider, to the support provider URL. As shown in steps 35 and 36, detection of such an update flag leads to the user being notified of that fact, again perhaps using a pop-up message, audible notification or e-mail, for example. Once again, (see step 37), the user then reconnects to the support provider URL, to access the update, with the additional information conceivably being sufficient for the session, then, to be terminated - see step 38. On the other hand, it may be that still more support is needed (step 39) meaning that a still further query is passed to the support provider, with the query/polling/flag sequence then repeating in an iterative manner, until the problem is resolved. As shown at step 40, the polling application is deleted from the client device once the iterative session has been brought to a conclusion.

Referring next to Figure 4, this illustrates, in more detail, the download, execution and deletion steps associated with the polling application "poller.exe".

As explained in relation to Figures 2 and 3, "poller.exe" is downloaded, under the authority of a trusted applet, with execution of the polling application causing a repeated polling of the support provider, so as to notify the user as and when a response/update becomes available.

So that the polling application is executed even after a system boot/start-up process, the trusted applet installs, in a registry of the device (on a windows PC, in the Windows Registry), a "Run" key so that the device executes "poller.exe" each time it is booted or restarted. This, of course, allows a user to disconnect from the support provider URL or even to power-down the device concerned, without losing the polling functionality of the support system.

Where a response received from the support provider is sufficient to solve the user's problem or to allay any concerns that the user may have, the support session is then terminated, with the polling application then being operative to remove the "Run" key from the device registry, and to add a "Run Once" key to the registry, whereby a "delete poller.exe" command is executed upon subsequent boot/start-up of the device concerned. With the poller.exe application thus deleted, it will be understood that the device is left "clean", in that no unnecessary code should remain on the device that was not present prior to the support session being initiated.

As will be appreciated from the foregoing, the invention provides a transparent support system (in that the user is not necessarily made aware of the fact that any data harvesting/polling applications have been downloaded) and which is computationally lightweight from a client-side viewpoint, in that the data harvesting and polling applications have a relatively small data footprint, conveniently in the order of 50 KB.

Moreover, the automatic polling facility offered by the invention allows a user to disconnect from a support session, with the device thus undertaking the repetitive task of checking for any query responses or updates, and with an automated notification being passed to the user in the event that a response/update is detected. The addition, in the device's registry, of "Run" and, subsequently, "Run Once" keys, allow the polling application to be executed on a continuing basis, up until it is no longer required, at which point the application is removed from the user's device, leaving the system "clean" for future use.

In the present specification "comprises" means "includes or consists of" and "comprising" means "including or consisting of".

## Claims

1. A method of obtaining asynchronous web-based active technical support for a data-processing device (10) from a support provider (11), comprising initiating a support session during which device-specific data is conveyed from the device (10) to the support provider (11) to assist the support provider (11) in responding to a support query, and polling the support provider (11) for a response to the query, on a repeated and automated basis, until a response becomes available or the support session is terminated, **characterized by**, said polling being performed by a polling application being supplied from or on behalf of the support provider (11), in response to an instruction generated using a trusted applet obtained from the support provider (11) and executed on the data-processing device (10).

2. A method according to claim 1 wherein the polling application, during the support session, is executed subsequent to each boot or start-up sequence of the device (10) .

3. A method according to claim 1 or 2 wherein the polling application, during the support session is stored on the device (10) in a manner whereby the application is executed subsequent to each boot or start-up sequence of the device.

4. A method according to claim 2 or 3 wherein, in a Windows O.S. environment, a Run key located in or operatively associated with the registry of the device (10) is used to execute the application, subsequent to each said boot or start-up sequence.

5. A method according to claim 4 wherein, upon termination of the support session, the Run key is removed or disabled.

6. A method according to claim 5 wherein the application subsequently is deleted using a delete command executed in accordance with a Run Once key located in or operatively associated with the registry.

7. A method according to any one of claims 2 to 6 wherein the support session is established using a web connection.

8. A method according to claim 7 wherein the applet is operative to download a data harvester to gather the device-specific data.

9. A method according to any one of claims 2 to 8 wherein the polling is effected using HTTP.

10. A method of providing asynchronous web-based active technical support from a support provider (11) to a user of a data-processing device (10) during a support session, the method comprising receiving device-specific data to assist the support provider in responding to a support query, supplying a polling application operative to poll the support provider for a response to the query and notifying the user that a response has become available, the polling application being supplied from or on behalf of the support provider (11), in response to an instruction generated using a trusted applet obtained from the support provider (11) and executed on the data-processing device (10).

11. A method according to claim 10 wherein, in a Windows O.S. environment, a Run key located in or operatively associated with the registry of the device is used to execute the application, subsequent to each said boot or start-up sequence.

12. A method according to claim 11 wherein, upon termination of the support session, the Run key is removed or disabled.

13. A server (11) for providing asynchronous web-based active technical support, the server comprising a web server for participating in asynchronous messaging with a client-side data-processing device (10), said data-processig device (10) initiating a support session during which device-specific data is conveyed from said device (10) to the server (11) to assist the server (10) in responding to a support query the server being operative to supply to the data-processing device (10), said data-processig device (10) initiating a support session during which device-specific data is conveyed from said device (10) to the server (11) to assist the server (10) in responding to a support query the server being operative to supply to the data-processing device (10) a polling application whereby repeated polling of the server for a response to the support query is effected, the polling application being supplied to the data-processing device (10) from or on behelt of the server (11) in response to an instruction generated using a trusted applet obtained from the server (11) and executed on the data processing device (10).

14. A software element for use in the provision of technical support from a support provider (11) to a user of a data-processing device, the software element being operative, to execute the steps of method claim 10.

15. A software element according to claim 14, wherein the polling application is transmissible from the support provider using HTTP.

16. A software element according to claim 14 or 15 wherein the polling application has a data footprint of no more than 50 KB.

## Patentansprüche

1. Verfahren zum Erhalt einer asynchronen netzbasierten aktiven technischen Unterstützung für eine Datenverarbeitungsvorrichtung (10) von einem Unterstützungsanbieter, umfassend die Initiierung einer Unterstützungssitzung, während der Vorrichtungs-spezifische Daten von der Vorrichtung (10) an den Unterstützungsanbieter (11) übertragen werden, um den Unterstützungsanbieter (11) bei der Beantwortung einer Unterstützungsanfrage zu unterstützen und den Unterstützungsanbieter (11) auf einer wiederholten und automatischen Basis nach einer Antwort auf die Anfrage abzufragen bis eine Antwort zur Verfügung steht oder die Unterstützungssitzung beendet ist, **dadurch gekennzeichnet, dass** die Abfrage durch eine Abfrageanwendung durchgeführt wird, die vom oder im Namen des Unterstützungsanbieters (11) bereitgestellt wird, in Antwort auf eine Anweisung, die unter Verwendung eines sicheren Applets erzeugt wird, welches vom Unterstützungsanbieter (11) erhalten und auf der Datenverarbeitungsvorrichtung (10) durchgeführt wird.

2. Verfahren nach Anspruch 1, wobei die Abfrageanwendung während der Unterstützungssitzung nach jeder Boot- oder Start-Sequenz der Vorrichtung (10) durchgeführt wird.

3. Verfahren nach Anspruch 1 oder 2, wobei die Abfrageanwendung während der Unterstützungssitzung auf der Vorrichtung (10) auf eine Weise gespeichert wird, durch die die Anwendung nach jeder Boot- oder Start-Sequenz der Vorrichtung durchgeführt wird.

4. Verfahren nach Anspruch 2 oder 3, wobei in einer Windows O.S.-Umgebung eine Run-Taste, die sich in der Registerdatenbank der Vorrichtung (10) befindet oder damit operativ verbunden ist, verwendet wird, um die Anwendung nach jeder der Boot- oder Start-Sequenz durchzuführen.

5. Verfahren nach Anspruch 4, wobei nach der Beendigung der Unterstützungssitzung die Run-Taste entfernt oder gesperrt wird.

6. Verfahren nach Anspruch 5, wobei die Anwendung in der Folge unter Verwendung eines Lösch-Befehls gelöscht wird, durchgeführt gemäß einer Run Once-Taste, die sich auf der Registerdatenbank befindet oder damit operativ verbunden ist.

7. Verfahren nach einem der Ansprüche 2 bis 6, wobei die Unterstützungssitzung unter Verwendung einer Netzverbindung aufgebaut wird.

8. Verfahren nach Anspruch 7, wobei das Applet funktionsfähig dazu ist, eine Daten-Gewinnungsvorrichtung herunterzuladen, um die Vorrichtungs-spezifischen Daten zu sammeln.

9. Verfahren nach einem der Ansprüche 2 bis 8, wobei die Abfrage unter Verwendung von HTTP durchgeführt wird.

10. Verfahren zur Bereitstellung einer asynchronen netzbasierten aktiven technischen Unterstützung von einem Unterstützungsanbieter (11) an einen Verwender einer Datenverarbeitungsvorrichtung (10) während einer Unterstützungssitzung, wobei das Verfahren den Empfang von Vorrichtungs-spezifischen Daten umfasst, um den Unterstützungsanbieter (11) bei der Beantwortung einer Unterstützungsanfrage zu assistieren, die Bereitstellung einer Abfrageanwendung, die funktionsfähig dazu ist, den Unterstützungsanbieter nach einer Antwort auf die Anfrage abzufragen, und dem Benutzer mitzuteilen, dass eine Antwort verfügbar ist, wobei die Abfrageanwendung von oder im Namen des Unterstützungsanbieters (11) bereitgestellt wird, in Antwort auf eine Anweisung, die unter Verwendung eines sicheren Applets erzeugt wird, welches vom Unterstützungsanbieter (11) erhalten und auf der Datenverarbeitungsvorrichtung (10) durchgeführt wird.

11. Verfahren nach Anspruch 10, wobei in einer Windows O.S.-Umgebung eine Run-Taste, die sich auf der Registerdatenbank der Vorrichtung befindet oder damit operativ verbunden ist, verwendet wird, um die Anwendung nach jeder der Boot- oder Start-Sequenz durchzuführen.

12. Verfahren nach Anspruch 11, wobei nach der Beendigung der Unterstützungssitzung die Run-Taste entfernt oder gesperrt wird.

13. Server (11) zur Bereitstellung einer asynchronen netzbasierten aktiven Unterstützung, wobei der Server einen Netzserver umfasst, um an der asynchronen Nachrichtenübertragung mit einer kundenseitigen Datenverarbeitungsvorrichtung (10) teilzunehmen, wobei die Datenverarbeitungsvorrichtung (10) eine Unterstützungssitzung initiiert, während der Vorrichtungs-spezifische Daten von der Vorrichtung (10) an den Server (11) übertragen werden, um den Server (11) bei der Beantwortung einer Unterstützungsanfrage zu unterstützen wobei der Server funktionsfähig dazu ist, der Datenverarbeitungsvorrichtung (10) eine Abfrageanwendung bereitzustellen, wodurch eine wiederholte Abfrage des Servers nach einer Antwort auf die Unterstützungsanfrage durchgeführt wird, wobei die Abfrageanwendung der Datenverarbeitungsvorrichtung (10) von oder im Namen des Servers (11) bereitgestellt wird, in Antwort auf eine Anweisung, die unter Verwendung eines sicheren Applets erzeugt wird, welches vom Server (11) erhalten und auf der Datenverarbeitungsvorrichtung (10) durchgeführt wird.

14. Softwareelement zur Verwendung bei der Bereitstellung von technischer Unterstützung von einem Unterstützungsanbieter (11) an einen Benutzer einer Datenverarbeitungsvorrichtung, wobei das Softwareelement funktionsfähig dazu ist, die Schritte des Verfahrens von Anspruch 10 durchzuführen.

15. Softwareelement nach Anspruch 14, wobei die Abfrageanwendung vom Unterstützungsanbieter unter Verwendung von HTTP übertragen werden kann.

16. Softwareelement nach Anspruch 14 oder 15, wobei die Abfrageanwendung einen Daten-Fußabdruck von nicht mehr als 50 KB aufweist.

## Revendications

1. Procédé d'obtention d'un support technique actif basé sur le Web asynchrone pour un dispositif de traitement de données (10) à partir d'un fournisseur de support (11), comprenant l'initiation d'une session de support pendant laquelle des données spécifiques à un dispositif sont transportées à partir du dispositif (10) au fournisseur de support (11) pour aider le fournisseur de support (11) à répondre à une requête de support, et l'invitation du fournisseur de support (11) à émettre une réponse à la requête, sur une base répétée et automatisée, jusqu'à ce qu'une réponse devienne disponible ou que la session du support soit terminée, **caractérisé par le fait que** ladite invitation à émettre est effectuée par une application d'invitation à émettre qui est fournie par ou pour le compte du fournisseur de support (11), en réponse à une instruction générée à l' aide d'une applet de confiance obtenue à partir du fournisseur de support (11) et exécutée sur le dispositif de traitement de données (10).

2. Procédé selon la revendication 1, dans lequel l'application d'invitation à émettre, pendant la session de support, est exécutée après chaque séquence de lancement ou de démarrage du dispositif (10).

3. Procédé selon l'une des revendications 1 ou 2, dans lequel l'application d'invitation à émettre, pendant la session de support, est stockée sur le dispositif (10) d'une manière suivant laquelle l'application est exécutée après chaque séquence de lancement ou de démarrage du dispositif.

4. Procédé selon l'une des revendications 2 ou 3, dans lequel, dans un environnement de système d'exploitation Windows, une clé Run située dans ou associée fonctionnellement au registre du dispositif (10) est utilisée pour exécuter l'application, après chaque séquence précitée de lancement ou de démarrage.

5. Procédé selon la revendication 4, dans lequel, lors de l'achèvement de la session de support, la clé Run est retirée ou inactivée.

6. Procédé selon la revendication 5, dans lequel l'application est par la suite supprimée à l'aide d'une commande de suppression exécutée conformément à une clé Run Once située dans ou associée fonctionnellement au registre.

7. Procédé selon l'une quelconque des revendications 2 à 6, dans lequel la session de support est établie à l'aide d'une connexion Web.

8. Procédé selon la revendication 7, dans lequel l'applet est opérationnelle pour télécharger un dispositif de collecte de données pour rassembler les données spécifiques au dispositif.

9. Procédé selon l'une quelconque des revendications 2 à 8, dans lequel l'invitation à émettre est effectuée à l'aide d'HTTP.

10. Procédé pour fournir un support technique actif basé sur le Web asynchrone à partir d'un fournisseur de support (11) à un utilisateur d'un dispositif de traitement de données (10) pendant une session de support, le procédé comprenant la réception de données spécifiques au dispositif pour aider le fournisseur de support (11) à répondre à une requête de support, la fourniture d'une application d'invitation à émettre opérationnelle pour inviter le fournisseur de support à émettre une réponse à la requête et la notification faite à l'utilisateur qu'une réponse est devenue disponible, l'application d'invitation à émettre étant fournie à partir de ou pour le compte du fournisseur de support (11), en réponse à une instruction générée à l'aide d'une applet de confiance obtenue à partir du fournisseur de support (11) et exécutée sur le dispositif de traitement de données (10).

11. Procédé selon la revendication 10, dans lequel, dans un environnement de système d'exploitation Windows, une clé Run située dans ou associée fonctionnellement au registre du dispositif est utilisée pour exécuter l'application, après chaque séquence de lancement ou de démarrage précitée.

12. Procédé selon la revendication 11, dans lequel, lors de l'achèvement de la session de support, la clé Run est retirée ou inactivée.

13. Serveur (11) pour fournir un support technique actif basé sur le Web asynchrone, le serveur comprenant un serveur Web pour participer à une messagerie asynchrone avec un dispositif de traitement des données côté client (10), ledit dispositif de traitement de données (10) initiant une session de support pendant laquelle des données spécifiques au dispositif sont transportées à partir dudit dispositif (10) au serveur (11) pour aider le serveur (11) à répondre à une requête de support, le serveur étant opérationnel pour fournir au dispositif de traitement de données (10) une application d'invitation à émettre, ce par quoi l'invitation à émettre répétée du serveur pour une réponse à la requête de support est effectuée, l'application d'invitation à émettre étant fournie au dispositif de traitement de données (10) à partir de ou pour le compte du serveur (11) en réponse à une instruction générée à l' aide d'une applet de confiance obtenue à partir du serveur (11) et exécutée sur le dispositif (10) de traitement des données.

14. Elément logiciel destiné à être utilisé dans la fourniture d'un support technique à partir d'un fournisseur de support (11) à un utilisateur d'un dispositif de traitement de données, l'élément logiciel étant opérationnel pour exécuter les étapes de la revendication de procédé 10.

15. Elément logiciel selon la revendication 14, dans lequel l'application d'invitation à émettre est transmissible à partir du fournisseur de support à l'aide d' HTTP.

16. Elément logiciel selon l'une des revendications 14 ou 15, dans lequel l'application d'invitation à émettre a une empreinte de données de pas plus de 50 KB.
